Europäisches Patentamt

European Patent Office

Office européen des brevets

(11) Numéro de publication : **0 436 428 B1**

(12) **FASCICULE DE BREVET EUROPEEN**

(45) Date de publication du fascicule du brevet :
09.03.94 Bulletin 94/10

(51) Int. Cl.$^5$ : **A01N 25/34, A01K 27/00**

(21) Numéro de dépôt : **90403733.0**

(22) Date de dépôt : **21.12.90**

(54) **Dispositif à libération contrôlée et procédé de préparation.**

(30) Priorité : **02.01.90 FR 9000009**

(43) Date de publication de la demande :
**10.07.91 Bulletin 91/28**

(45) Mention de la délivrance du brevet :
**09.03.94 Bulletin 94/10**

(84) Etats contractants désignés :
**AT BE CH DE DK ES FR GB GR IT LI LU NL**

(56) Documents cités :
**EP-A- 0 178 908**
**DE-A- 3 730 820**
**FR-A- 1 598 644**

(56) Documents cités :
**FR-A- 2 370 572**
**FR-A- 2 386 254**
**GB-A- 1 326 825**
**US-A- 4 594 380**

(73) Titulaire : **LABORATOIRES VIRBAC**
**1ère Avenue - 2065 M - L.I.D.**
**F-06516 Carros (FR)**

(72) Inventeur : **Derrieu, Guy**
**Le Riviera Parc, 33 Chemin du Lautin**
**F-06800 Cagnes Sur Mer (FR)**

(74) Mandataire : **Brycman, Jean et al**
**CABINET ORES 6, Avenue de Messine**
**F-75008 Paris (FR)**

Jouve, 18, rue Saint-Denis, 75001 PARIS

EP 0 436 428 B1

## Description

La présente invention est relative à un dispositif destiné à permettre la libération contrôlée continue et complète de substances chimiques y compris des médicaments, et ce, pendant une très longue période, ladite libération des substances actives suivant une cinétique déterminée, -à savoir la libération d'une dose journalière à peu près constante tout au long de la durée de validité du dispositif,- s'effectuant à partir d'une matrice polymérique insoluble vers une zone appropriée d'un organisme animal ou humain.

La présente invention est également relative au procédé de préparation dudit dispositif.

On connaît de très nombreux systèmes permettant la libération réglée et programmée de substances actives.

Ce sont tous des systèmes solides ou semi-solides, du type par exemple comprimés ou suppositoires dont la composition est définie de façon à conduire à une désagrégation lente du système, la désagrégation elle-même étant obtenue, soit par effet purement mécanique, soit par une solubilisation partielle par le milieu liquide, par exemple, les fluides corporels d'un ou de plusieurs composants formant le système.

Il est connu, également, de disperser le principe actif dans un support solide et d'obtenir sa libération programmée par diffusion à travers un tel support.

Dans ce cas également, les systèmes décrits sont nombreux :
- on connaît des systèmes dits hémiperméables dans lesquels l'agent actif dissous, suspendu ou émulsionné dans un véhicule inerte diffuse à travers une membrane perméable ;
- on connaît également des systèmes composés dans lesquels l'agent actif diffuse à partir d'un support solide plus ou moins poreux, constitué d'une matrice à base de polymères ou copolymères.

Quel que soit le système choisi, les vitesses de libération ne sont maintenues que pendant un laps de temps très court et il ne se prête donc pas à une utilisation prolongée.

On connaît également des systèmes solides qui peuvent être appliquées par contact, notamment sur la peau.

On peut citer en particulier des dispositifs aptes à libérer progressivement un insecticide de contact destiné à la protection des animaux contre les parasites, et en particulier contre les ectoparasites. La plupart de ces dispositifs sont constitués par un insecticide inclus dans une matrice en matière plastique. La libération lente du produit ectoparasiticide (qu'il agisse par sa vapeur ou qu'il se dépose sur les poils de l'animal), permet une protection efficace contre les parasites pendant plusieurs mois.

De tels dispositifs antiparasitaires ont fait l'objet de très nombreux Brevets, notamment les Brevets français de la Demanderesse FR 2 447 679, FR 2 269 859 et FR 2 307 456, ainsi que les Brevets FR 2 436 563 au nom de SHELL INTERNATIONAL RESEARCH, FR 2 370 572 et FR 2 392 606 au nom de A.H. ROBINS COMPANY INC, FR 1 598 644 et FR 2 213 014 au nom de Robert ARIES, FR 2 374 853, FR 2 386 253 et FR 2 386 254, au nom de BAYER AG, et sont essentiellement composés de trois éléments de base :
- un insecticide (ou mélange d'insecticides),
- une matrice (généralement à base d'une résine thermoplastique),
- des adjuvants (comme les plastifiants, les pigments, les stabilisants ou les charges inertes, etc...).

Cependant, l'ensemble des dispositifs de l'Art antérieur présentent deux inconvénients majeurs :
- ils ne libèrent jamais la totalité du principe actif qu'ils contiennent, ce qui peut être important, voire nécessaire, notamment dans le cas de principes actifs coûteux ;
- la libération du principe actif n'est pas constante ; en effet, la quantité libérée au début de l'utilisation est très importante, puis elle va décroître très rapidement pour devenir nulle.

Ces inconvénients des dispositifs de l'Art antérieur sont notamment liés à l'introduction à chaud du principe actif, qui est alors absorbé ou adsorbé par la résine, ce qui entraîne une rétention importante du principe actif dans cette dernière (de l'ordre de 30 à 70 %, selon les cas). Cette rétention importante du principe actif, dans les dispositifs de l'Art antérieur, est notamment due aux faits suivants :
. le principe actif se comporte comme un plastifiant de la résine (échange plastifiant ↔ principe actif), lorsque celui-ci est liquide, et il est, en ce cas, absorbé par la résine ; et
. le plastifiant se comporte comme un solvant du principe actif, lorsque celui-ci est solide, et ce dernier est, en ce cas, adsorbé par le plastifiant inclus dans la résine.

La présente invention s'est par conséquent fixé pour but de pourvoir à un dispositif qui répond mieux aux nécessités de la pratique que les dispositifs visant au même but antérieurement connus, notamment en ce qu'il assure une libération de la totalité du principe actif inclus dans ledit dispositif sur une durée variable mais prévisible et surtout permet une libération journalière sensiblement constante, tout au long de la durée dudit dispositif.

La présente invention a pour objet un dispositif permettant la libération progressive et programmée d'une ou plusieurs substances ou principes actifs, caractérisé en ce qu'il est susceptible d'être obtenu par :

(a) préparation d'une poudre comprenant une matrice polymérique ou résine, dans laquelle au moins un plastifiant approprié se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins 5 % d'au moins un support de principe actif avec la poudre obtenue en (b) puis

(d) addition, à une température inférieure à 30°C, du/des principes actifs ; et

(e) mise en forme appropriée, à une température inférieure à 30°C, de la poudre obtenue en (d), par tout moyen convenable,

lequel dispositif libère le principe actif de manière uniforme et totale.

Le dispositif selon l'invention permet, de manière inattendue, une libération totale, uniforme et progressive du principe actif, car celui-ci n'est ni absorbé, ni adsorbé par la matrice polymérique ou résine ; en effet, le procédé d'obtention conforme à l'invention résoud le problème de la libération totale du principe actif, à partir d'une matrice polymérique :

. en modifiant l'ordre et les conditions d'introduction des différents éléments ; à savoir, résine et plastifiant d'une part, à chaud, refroidissement de la poudre obtenue, puis introduction du support de principe actif et du/des principe(s) actif(s), à froid ; et

. en modifiant le principe actif, à l'aide du support de principe actif, de telle sorte que l'on obtienne un mélange sec, convenable à la mise en forme souhaitée.

Le mélange résine et plastifiant, à chaud, en entraînant une dilatation des pores de la résine, permet de saturer la résine en plastifiant ; puis le refroidissement de la résine plastifiée, en entrainant la fermeture des pores de la résine, la rend inerte vis-à-vis du principe actif.

L'introduction, à froid, du support de principe actif, puis du principe actif, permet d'absorber ou d'adsorber ce dernier sur le support de principe actif et non dans la résine.

Selon un mode de réalisation avantageux dudit dispositif, le support de principe actif, est avantageusement choisi dans le groupe qui comprend les charges minérales telles que sulfate de baryum, carbonate de calcium, zéolithes, diatomées, kaolin, talc, silice, silicate de calcium hydraté, trioxyde d'antimoine, oxyde de titane, les microbilles de verre, les fibres textiles naturelles ou synthétiques et la sciure de bois.

La Demanderesse a trouvé que pour permettre la libération totale du principe actif, le choix du support de principe actif est très important et qu'il dépend notamment de la nature du principe actif, de sa formule chimique et de son encombrement spatial. Il faut également éviter entre le support de principe actif et le principe actif, les compatibilités chimiques (sinon il y aura rétention d'une partie ou de la totalité de ce principe actif, physiques (si le support de principe actif est trop poreux, il piègera le principe actif et ne pourra pas le restituer), mécaniques (la taille des particules dudit support peut perturber la sortie du principe actif, surtout s'il est sous forme solide).

Selon un autre mode de réalisation avantageux dudit dispositif, le plastifiant est choisi dans le groupe qui comprend notamment les esters tels que phtalates, adipates, sébaçates ou phosphates.

On entend par plastifiant, au sens de la présente invention, tout composé, généralement liquide, compatible avec la matrice macromoléculaire et lui conférant de la souplesse.

On peut citer comme plastifiant approprié, et ce de manière non limitative, l'adipate d'isobutyle, l'adipate de diéthyl-2 hexyle, le phtalate de diéthyl-2 hexyle, le phtalate de dibutyle.

Selon un autre mode de réalisation avantageux dudit dispositif, il comprend en outre au moins un adjuvant choisi dans le groupe qui comprend les colorants, les pigments, les lubrifiants, les anti-oxydants, les stabilisants à la chaleur ou aux ultraviolets, les agents porogènes, les désodorisants, les parfums, d'autres biocides, des attractifs.

Selon un autre mode de réalisation avantageux dudit dispositif, la matrice ou résine est notamment réalisée à partir de polymères ou copolymères choisis dans le groupe qui comprend les polymères vinyliques, les polyéthylènes, les polypropylènes, les polyacétates, les polyuréthanes et les acétates de vinyle.

Le choix de ladite matrice dépend du (des) principe(s) actif(s), des autres composants principaux et surtout de l'article et de l'usage que l'on désire en faire.

Selon encore un autre mode de réalisation avantageux dudit dispositif, il comprend, exprimé en pourcentage du poids de la composition totale :

- entre 10 et 60 % de matrice polymérique ou résine
- entre 5 et 40 % de plastifiant
- entre 3 et 80 % de principe actif
- entre 5 et 80 % de support de principe actif.

Selon une disposition avantageuse de ce mode de réalisation, ledit dispositif comprend entre 5 et 50 % de support de principe actif.

Les quantités respectives des différents composants présents dans le dispositif conforme à l'invention sont fonction de la quantité de principe actif à introduire.

Le principe actif peut être sous forme liquide ou sous forme solide. Dans ce dernier cas, il peut être mis sous forme liquide par l'adjonction d'un solvant approprié, dont le choix dépend de la nature chimique du principe actif.

En variante, le dispositif conforme à l'invention, comprend, en outre, une enveloppe polymérique étanche au(x) principe(s) actif(s) et couvrant partiellement la surface du dispositif tel que défini ci-dessus.

Un tel dispositif, dans lequel l'enveloppe est dénommée "partie passive" et le dispositif tel que défini ci-dessus, "partie active", a l'avantage d'orienter la libération progressive, programmée, uniforme et totale du principe actif.

Conformément à cette variante du dispositif, l'enveloppe est avantageusement un polymère choisi dans le groupe qui comprend notamment les polymères vinyliques, les polyéthylènes, les polypropylènes, les polyacétates, les polyuréthanes et les acétates de vinyle.

La présente invention a également pour objet un procédé de préparation dudit dispositif, caractérisé par les étapes suivantes :

(a) préparation d'une poudre comprenant la matrice polymérique ou résine, dans laquelle le plastifiant se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins un support de principe actif avec la poudre obtenue en (b) ; puis

(d) addition, à une température inférieure à 30°C, du/des principes actifs ; et

(e) mise sous une forme appropriée, à une température inférieure à 30°C, par tout moyen convenable.

Un tel procédé a l'avantage de permettre une adsorption à froid du/des principes actifs sur le support de principe actif préalablement intimement mélangé avec la matrice polymérique plastifiée, stabilisée à froid et devenue ainsi inerte par rapport au principe actif.

Le dispositif peut avantageusement être mis sous une forme absorbable par voie orale ou encore sous la forme d'un collier, antiparasitaire notamment.

La mise en forme de ce dispositif est réalisée, de manière connue par l'Homme de l'Art, par coulée, par injection moulage ou par extrusion.

Selon un mode de mise en oeuvre avantageux dudit procédé, la température appropriée à la projection à chaud du plastifiant est de l'ordre de 70-80°C.

Selon un autre mode de mise en oeuvre avantageux dudit procédé, il comprend, en outre, la préparation séparée de l'enveloppe, également dénommée "partie passive" du dispositif, à partir de polymères choisis dans le groupe qui comprend notamment les polymères vinyliques, les polyéthylènes, les polypropylènes, les polyacétates, les polyuréthanes et les acétates de vinyle.

Conformément à ce mode de mise en oeuvre, l'enveloppe ou "partie passive", est réalisée, de manière connue en soi, par coulée, par injection moulage ou par extrusion.

La "partie passive" et la "partie active" dudit dispositif peuvent avantageusement être réalisées simultanément et la mise en forme est alors de préférence effectuée par co-extrusion.

Ledit dispositif, partie active seule ou associée à la partie passive, est notamment applicable à la préparation de médicaments administrables per os, à la préparation de médicaments administrables par contact cutané et à la préparation de colliers antiparasitaires.

Outre les dispositions qui précèdent, l'invention comprend encore d'autres dispositions, qui ressortiront de la description qui va suivre, qui se réfère à des exemples de mise en oeuvre du procédé objet de la présente invention et au dessin annexé dans lequel les figures la, 1b et 1c montrent, en coupe, des modes de réalisation du dispositif conforme à l'invention avec enveloppe.

Le procédé conforme à l'invention peut être mis en oeuvre comme suit : partie active : on mélange intimement la résine avec les stabilisants et les lubrifiants et on chauffe le mélange vers 70°-80°C. Quand la résine stabilisée est à température, on projette le(s) plastifiant(s) préalablement chauffé(s) à la même température que la résine sous forme de fines gouttelettes, en prenant soin de maintenir la température de la résine. Le(s) plastifiant(s) se trouve(nt) ainsi intégralement absorbé(s) et l'ensemble plastifié se présente sous forme d'une poudre parfaitement sèche. Le mélange est transvasé mécaniquement dans une cuve à refroidissement qui permet d'éviter d'avoir, pour la suite des opérations, un mélange chaud, qui peut entraîner une désaturation de la résine et un risque de gélification prématurée de celle-ci. Le mélange étant parfaitement froid, on introduit le (les) support(s) de principe actif et on mélange intimement. Les principes actifs qui se présentent sous une forme liquide sont projetés ensuite en fines gouttelettes sur le mélange, et vont alors être adsorbés par le support alors que les principes actifs qui se présentent sous une forme solide sont intimement mélangés avec le reste de la formulation. Les autres adjuvants (colorants, agents porogènes, parfums,...) sont ajoutés au mé-

4

lange à l'étape de fabrication la mieux adaptée à la nature de l'ajout.

Partie passive : la résine peut être employée telle quelle, ou bien elle peut être mélangée avec d'autres composés comme des stabilisants, des plastifiants ou autres corps améliorant ses qualités, en particulier l' imperméabilité au(x) principe(s) actif(s).

**EXEMPLE 1** :

On prépare par extrusion des colliers de même taille pour animaux familiers contenant 15% en poids de diazinon (thionophosphate de O,O-diéthyl O-(isopropyl-2 méthyl-4 pyrimidinyl-6), 3,5% de stabilisants, lubrifiants et colorants, de l'adipate d'isobutyle, du chlorure de polyvinyle, un mélange de supports de principe actif carbonate de calcium/silice, en respectant le protocole de fabrication énoncé ci-dessus. On peut utiliser diverses quantités de supports comme visible dans le Tableau I ci-après :

TABLEAU I

| ESSAI 1 | ESSAI 2 | ESSAI 3 | ESSAI 4 | ESSAI 5 | |
|---------|---------|---------|---------|---------|--------|
| 58% | 50% | 37% | 32% | 30,5% | PVC |
| 23,5% | 21,5% | 24,5% | 14,5% | 11% | DIBA |
| 0% | 10% | 20% | 35% | 38% | CaCO$_3$ |
| 0% | 0% | 0% | 0% | 2% | Silice |
| (*) | (*) | (*) | (*) | | |

PVC     = chlorure de polyvinyle

DIBA    = adipate de diisobutyle

CaCO$_3$ = carbonate de calcium

(*) un chauffage a été nécessaire pour pouvoir obtenir un mélange final sec qui puisse être extrudé.

La cinétique de libération du diazinon a été réalisée en faisant porter 6 colliers de chaque essai par des chiens de race Beagle d'un poids compris entre 9 et 11 kg. Un échantillon de 500 mg de collier est prélevé sur chaque animal à des temps différents et analysé par chromatographie liquide haute performance. Dans le Tableau II ci-dessous, les moyennes des six valeurs du diazinon restant par collier et pour chaque lot à un temps donné sont portées :

TABLEAU II

| ESSAI 1 | ESSAI 2 | ESSAI 3 | ESSAI 4 | ESSAI 5 | TEMPS |
|---------|---------|---------|---------|---------|-------|
| 100% | 100% | 100% | 100% | 100% | 0 j |
| 97% | 94,6% | 92,4% | 89,8% | 95,5% | 7 j |
| 87,2% | 85,1% | 76,7% | 80,1% | 79,8% | 28 j |
| 79,8% | 78% | 70,8% | 64,5% | 70,2% | 56 j |
| 78,5% | 75,2% | 66,6% | 61,8% | 63,9% | 84 j |
| 79,7% | 73,1% | 63,8% | 55% | 55% | 140 j |
| arrêt | 74,7% | 61,9% | 51% | 42,3% | 196 j |
| | arrêt | 60,2% | 47,2% | 31,3% | 252 j |
| | | 60,5% | 42,1% | 17,0% | 308 j |
| | | arrêt | 42,1% | 8,4% | 336 j |
| | | | 41,9% | 0,3% | 364 j |

Les résultats montrent que le procédé conforme à l'invention facilite la sortie ou libération de l'insecticide. Néanmoins, il n'a pas été possible de réaliser des colliers sans chauffer le mélange pendant l'introduction de

EP 0 436 428 B1

l'insecticide dans les essais 1, 2, 3 et 4 donc une partie de l'insecticide sert de plastifiant et il n'y a plus d'élimination totale, alors que dans l'essai 5 qui comprend une quantité supplémentaire de supports permet d'incorporer l'insecticide à froid et d'obtenir la libération totale de l'insecticide, but de cette invention.

**EXEMPLE 2 :**

De façon similaire à l'exemple 1 les compositions suivantes, définies au Tableau III ci-dessous, ont été réalisées sous forme de colliers et l'élimination de l'insecticide a été mesurée.

TABLEAU III : FORMULES

|  | AMITRAZ | PVC | CaCO3 | DOA | AUTRES |
|---|---|---|---|---|---|
| ESSAI 1 | 9% | 56,4% | 0% | 31,1% | 3,5% |
| ESSAI 2 | 9% | 50% | 10% | 27,5% | 3,5% |

DOA = adipate de diethyl-2 hexyle

\* le mélange de l'essai n°1 a nécessité un chauffage pour obtenir un mélange sec.

La cinétique de libération de l'amitraz a été réalisée en faisant porter 6 colliers de chaque essai par des chiens de race Beagle d'un poids compris entre 9 et 11 kg. Un échantillon de 500 mg de collier est prélevé sur chaque animal à des temps différents et analysé par chromatographie liquide haute performance. Dans le Tableau IV ci-dessous, les moyennes des six valeurs de l'amitraz restant par collier à un temps donné sont portées :

TABLEAU IV : ELIMINATION

| TEMPS | 0j | 15j | 30j | 60j | 90j | 120j |
|---|---|---|---|---|---|---|
| ESSAI 1 | 100% | 79,9% | 69,9% | 60,2% | 59,7% | 59,4% |
| ESSAI 2 | 100% | 76,7% | 63,3% | 32,7% | 20,4% | 2% |

**EXEMPLE 3 :**

De façon similaire à l'exemple 1 les compositions suivantes, indiquées au Tableau V ci-dessous, ont été réalisées sous forme de colliers et l'élimination de l'insecticide a été mesurée comme précisé ci-dessus à l'exemple 2.

TABLEAU V : FORMULE

|  | PROPOXUR | PVC | TALC | DOP/DBP | AUTRES |
|---|---|---|---|---|---|
| ESSAI 1 | 9,5% | 57% | 0% | 30% | 3,5% |
| ESSAI 2 | 9,5% | 48% | 15% | 24% | 3,5% |

DOP/DBP = mélange de phtalate de diethyl-2 hexyle et de phtalate de dibutyle

6

\* le mélange de l'essai n˚1 a nécessité un chauffage pour obtenir un mélange sec.

TABLEAU VI : ELIMINATION

| TEMPS | 0j | 15j | 30j | 60j | 90j | 120j |
|---|---|---|---|---|---|---|
| ESSAI 1 | 100% | 84,1% | 75,4% | 64,2% | 60,8% | 59,8% |
| ESSAI 2 | 100% | 72% | 56,9% | 34,3% | 18,9% | 3,8% |

**EXEMPLE 4 :**

On prépare un dispositif comprenant une enveloppe, la partie active étant préparée comme décrit dans l'Exemple 1 ; les pourcentages des composés principaux de la partie active ont la composition suivante :

Diazinon 15 %
DIBA 11,5 %
$CaCO_3$ 38 %
Silice 2 %
PVC 30,5 %

et la partie passive (enveloppe) est du polyuréthane, employé tel quel.

Un tel dispositif est illustré aux figures la à 1c, dans lesquelles la partie passive 20 oriente, de manière différente, la libération du principe actif contenu dans la partie active 10.

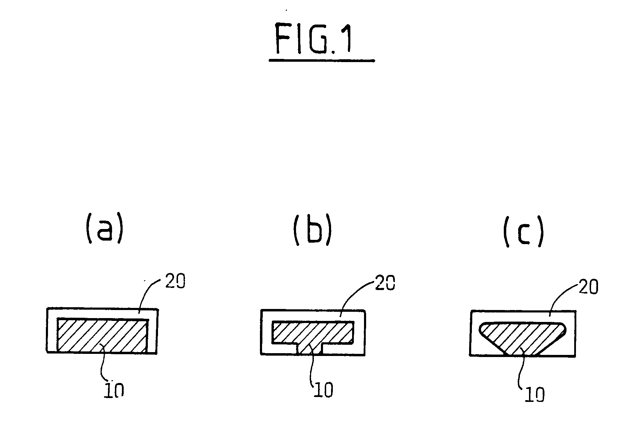

Le dispositif est mis sous forme de collier par co-extrusion des parties active et passive et a, dans cet exemple, la section décrite à la figure 1c. L'élimination a été mesurée comme visible sur le Tableau VII ci-dessous.

TABLEAU VII : ELIMINATION

| TEMPS | 0 j | 7 j | 28 j | 56 j | 84 j |
|---|---|---|---|---|---|
| % libéré | 0 % | 4,5 % | 9,9 % | 15,7 % | 22,2 % |
| TEMPS | 140 j | 196 j | 252 j | 308 j | 336 j |
| % libéré | 35,2 % | 48 % | 61,1 % | 73,6 % | 80,5 % |

**Revendications**

**Revendications pour les Etats contractants suivants : AT, BE, CH, LI, DE, DK, FR, GB, IT, LU, NL**

1.   Dispositif permettant la libération pro- gressive et programmée d'une ou plusieurs substances ou principes actifs, caractérisé en ce qu'il est susceptible d'être obtenu par :
       (a) préparation d'une poudre comprenant une matrice polymérique ou résine, dans laquelle au moins un plastifiant approprié se trouve intégralement absorbé, par projection à chaud dudit plastifiant, préalablement chauffé sur ladite matrice maintenue à température, pour saturer ladite résine en plastifiant ;
       (b) refroidissement de la poudre obtenue en (a) à une température inférieure à 30°C ;
       (c) mélange à froid d'au moins 5 % d'au moins un support de principe actif avec la poudre obtenue en

7

(b) ; puis

(d) addition, à une température inférieure à 30°C, du/des principes actifs ; et

(e) mise en forme appropriée, à une température inférieure à 30°C, de la poudre obtenue en (d), par tout moyen convenable,

lequel dispositif libère le principe actif de manière uniforme et totale.

2. Dispositif selon la revendication 1, caractérisé en ce que le support de principe actif est choisi dans le groupe qui comprend les charges minérales telles que sulfate de baryum, carbonate de calcium, zéolithes, diatomées, kaolin, talc, silice, silicate de calcium hydraté, trioxyde d'antimoine, oxyde de titane, les microbilles de verre, les fibres textiles naturelles ou synthétiques et la sciure de bois.

3. Dispositif selon la revendication 1 ou la revendication 2, caractérisé en ce que le plastifiant est choisi dans le groupe qui comprend les esters tels que phtalates, adipates, sébaçates ou phosphates.

4. Dispositif selon l'une quelconque des revendications 1 à 3, caractérisé en ce qu'il comprend en outre au moins un adjuvant choisi dans le groupe qui comprend les colorants, les pigments, les lubrifiants, les antioxydants, les stabilisants à la chaleur ou aux ultraviolets, les agents porogènes, les désodorisants, les parfums, d'autres biocides, des attractifs.

5. Dispositif selon l'une quelconque des revendications 1 à 4, caractérisé en ce que la matrice est réalisée à partir de polymères ou copolymères choisis dans le groupe qui comprend les polymères vinyliques, les polyéthylènes, les polypropylènes, les polyacétates, les polyuréthanes et les acétates de vinyle.

6. Dispositif selon l'une quelconque des revendications 1 à 5, caractérisé en ce qu'il comprend, exprimé en pourcentage du poids de la composition totale :
   - entre 10 et 60 % de matrice polymérique ou résine
   - entre 5 et 40 % de plastifiant
   - entre 3 et 80 % de principe actif
   - entre 5 et 80 % de support du/des principes actifs.

7. Dispositif selon la revendication 6, caractérisé en ce qu'il comprend entre 5 et 50 % de support de principe actif.

8. Dispositif selon l'une quelconque des revendications 1 à 7, caractérisé en ce qu'il comprend, en outre, une enveloppe polymérique étanche au(x) principe(s) actif(s) et couvrant partiellement la surface du dispositif.

9. Dispositif selon la revendication 8, caractérisé en ce que l'enveloppe est un polymère choisi dans le groupe qui comprend les polymères vinyliques, les polyéthylènes, les polypropylènes, les polyacétates, les polyuréthanes et les acétates de vinyle.

10. Procédé de préparation du dispositif selon l'une quelconque des revendications 1 à 9, caractérisé par les étapes suivantes :
    (a) préparation d'une poudre comprenant la matrice polymérique ou résine, dans laquelle le plastifiant se trouve intégralement absorbé, par projection à chaud dudit plastifiant, préalablement chauffé sur ladite matrice maintenue à température, pour saturer ladite résine en plastifiant ;
    (b) refroidissement de la poudre obtenue en (a) à une température inférieure à 30°C ;
    (c) mélange à froid d'au moins un support de principe actif avec la poudre obtenue en (b) ; puis
    (d) addition, à une température inférieure à 30°C, du/des principes actifs ; et
    (e) mise sous une forme appropriée, à une température inférieure à 30°C, par tout moyen convenable.

11. Procédé selon la revendication 10, caractérisé en ce que la température appropriée à la projection à chaud du plastifiant est de l'ordre de 70-80°C.

12. Médicament administrable per os, caractérisé en ce qu'il est constitué par un dispositif selon l'une quelconque des revendications 1 à 9.

13. Médicament administrable par contact cutané, caractérisé en ce qu'il est constitué par un dispositif selon l'une quelconque des revendications 1 à 9.

**14.** Collier antiparasitaire, caractérisé en ce qu'il est constitué par un dispositif selon l'une quelconque des revendications 1 à 9.

## Revendications pour les Etats contractants suivants : ES, GR

**1.** Dispositif permettant la libération progressive et programmée d'une ou plusieurs substances ou principes actifs, caractérisé en ce qu'il est susceptible d'être obtenu par :

(a) préparation d'une poudre comprenant une matrice polymérique ou résine, dans laquelle au moins un plastifiant approprié se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins 5 % d'au moins un support de principe actif avec la poudre obtenue en (b) ; puis

(d) addition, à une température inférieure à 30°C, du/des principes actifs ; et

(e) mise en forme appropriée, à une température inférieure à 30°C, de la poudre obtenue en (d), par tout moyen convenable,

lequel dispositif libère le principe actif de manière uniforme et totale.

**2.** Dispositif selon la revendication 1, caractérisé en ce que le support de principe actif est choisi dans le groupe qui comprend les charges minérales telles que sulfate de baryum, carbonate de calcium, zéolithes, diatomées, kaolin, talc, silice, silicate de calcium hydraté, trioxyde d'antimoine, oxyde de titane, les microbilles de verre, les fibres textiles naturelles ou synthétiques et la sciure de bois.

**3.** Dispositif selon la revendication 1 ou la revendication 2, caractérisé en ce que le plastifiant est choisi dans le groupe qui comprend les esters tels que phtalates, adipates, sébaçates ou phosphates.

**4.** Dispositif selon l'une quelconque des revendications 1 à 3, caractérisé en ce qu'il comprend en outre au moins un adjuvant choisi dans le groupe qui comprend les colorants, les pigments, les lubrifiants, les antioxydants, les stabilisants à la chaleur ou aux ultraviolets, les agents porogènes, les désodorisants, les parfums, d'autres biocides, des attractifs.

**5.** Dispositif selon l'une quelconque des revendications 1 à 4, caractérisé en ce que la matrice est réalisée à partir de polymères ou copolymères choisis dans le groupe qui comprend les polymères vinyliques, les polyéthylènes, les polypropylènes, les polyacétates, les polyuréthanes et les acétates de vinyle.

**6.** Dispositif selon l'une quelconque des revendications 1 à 5, caractérisé en ce qu'il comprend, exprimé en pourcentage du poids de la composition totale :

- entre 10 et 60 % de matrice polymérique ou résine
- entre 5 et 40 % de plastifiant
- entre 3 et 80 % de principe actif
- entre 5 et 80 % de support du/des principes actifs.

**7.** Dispositif selon la revendication 6, caractérisé en ce qu'il comprend entre 5 et 50 % de support de principe actif.

**8.** Dispositif selon l'une quelconque des revendications 1 à 7, caractérisé en ce qu'il comprend, en outre, une enveloppe polymérique étanche au(x) principe(s) actif(s) et couvrant partiellement la surface du dispositif.

**9.** Dispositif selon la revendication 8, caractérisé en ce que l'enveloppe est un polymère choisi dans le groupe qui comprend les polymères vinyliques, les polyéthylènes, les polypropylènes, les polyacétates, les polyuréthanes et les acétates de vinyle.

**10.** Procédé de préparation du dispositif selon l'une quelconque des revendications 1 à 9, caractérisé par les étapes suivantes :

(a) préparation d'une poudre comprenant la matrice polymérique ou résine, dans laquelle le plastifiant se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins un support de principe actif avec la poudre obtenue en (b) ; puis

(d) addition, à une température inférieure à 30°C, du/des principes actifs ; et

(e) mise sous une forme appropriée, à une température inférieure à 30°C, par tout moyen convenable.

11. Procédé selon la revendication 10, caractérisé en ce que la température appropriée à la projection à chaud du plastifiant est de l'ordre de 70-80°C.

12. Procédé de préparation d'un médicament administrable per os, constitué par un dispositif selon l'une quelconque des revendications 1 à 9, caractérisé en ce qu'il comprend les étapes suivantes :

(a) préparation d'une poudre comprenant la matrice polymérique ou résine, dans laquelle le plastifiant se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins un support de principe actif avec la poudre obtenue en (b) ; puis

(d) addition, à une température inférieure à 30°C, du/des principes actifs ; et

(e) mise sous une forme appropriée, à une température inférieure à 30°C, par tout moyen convenable.

13. Procédé de préparation d'un médicament administrable par contact cutané, constitué par un dispositif selon l'une quelconque des revendications 1 à 9, caractérisé en ce qu'il comprend les étapes suivantes :

(a) préparation d'une poudre comprenant la matrice polymérique ou résine, dans laquelle le plastifiant se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins un support de principe actif avec la poudre obtenue en (b) ; puis

(d) addition, à une température inférieure à 30°C, du/des principes actifs ; et

(e) mise sous une forme appropriée, à une température inférieure à 30°C, par tout moyen convenable.

14. Procédé de préparation d'un collier anti-parasitaire, constitué par un dispositif selon l'une quelconque des revendications 1 à 9, caractérisé en ce qu'il comprend les étapes suivantes :

(a) préparation d'une poudre comprenant la matrice polymérique ou résine, dans laquelle le plastifiant se trouve intégralement absorbé, par projection à chaud dudit plastifiant, préalablement chauffé sur ladite matrice maintenue à température, pour saturer ladite résine en plastifiant ;

(b) refroidissement de la poudre obtenue en (a) à une température inférieure à 30°C ;

(c) mélange à froid d'au moins un support de principe actif avec la poudre obtenue en (b) ; puis

(d) addition, à une température inférieure à 30°C, du/des principes actifs ; et

(e) mise sous une forme appropriée, à une température inférieure à 30°C, par tout moyen convenable.

**Patentansprüche**

**Patentansprüche für folgende Vertragsstaaten : AT, BE, CH, DE, DK, FR, GB, IT, LI, LU, NL**

1. Vorrichtung zur progressiven und programmierten Freisetzung einer oder mehrerer Substanz(en) oder Wirkstoff(e), dadurch **gekennzeichnet,** daß sie erhalten werden kann durch:

(a) Herstellung eines Pulvers aus einer Polymermatrix oder einem Harz, worin mindestens ein geeigneter Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;

(b) Abkühlen des gemäß (a) erhaltenen Pulvers auf eine Temperatur unter 30°C;

(c) Mischen von mindestens 5% mindestens eines Trägers für den Wirkstoff mit dem gemäß (b) erhaltenen Pulver in der Kälte, dann

(d) Zugabe, der bzw. des Wirkstoffe(s), auf eine Temperatur unter 30°C, und

(e) geeignete Formgebung, auf eine Temperatur unter 30°C, des gemäss (d) erhaltenen Pulvers auf jede geeignete Art, wobei die Vorrichtung den Wirkstoff gleichförmig und vollständig freisetzt.

2. Vorrichtung nach Anspruch 1, dadurch **gekennzeichnet,** daß der Träger für den Wirkstoff vorteilhafterweise aus der Gruppe mineralische Füllstoffe, wie Bariumsulfat, Calciumcarbonat, Zeolithe, Diatomeen, Kaolin, Talk, Kieselerde, hydratisiertes Calciumsilicat, Antimontrioxid, Titanoxid, kleine Glaskugeln, natürliche oder synthetische Textilfasern und Sägemehl, ausgewählt ist.

3.  Vorrichtung nach Anspruch 1 oder 2, dadurch **gekennzeichnet,** daß der Weichmacher aus der Gruppe, die Ester, wie Phthalate, Adipate, Sebacate oder phosphate, umfaßt, ausgewählt ist.

4.  Vorrichtung nach einem der Ansprüche 1 bis 3, dadurch **gekennzeichnet,** daß sie weiterhin mindestens einen Hilfsstoff, ausgewählt aus der Gruppe Farbstoffe, Pigmente, Schmiermittel, Antioxidantien, Wärme- oder UV-Stabilisatoren, Treibmittel, Desodorantien, Parfums, sonstige Biozide, Anlockungsmittel, enthält.

5.  Vorrichtung nach einem der Ansprüche 1 bis 4, dadurch **gekennzeichnet,** daß die Matrix , ausgehend von Polymeren oder von Copolymeren, ausgewählt aus der Gruppe Vinylpolymere, Polyethylene, Polypropylene, Polyacetate, Polyurethane und Vinylacetate, hergestellt ist.

6.  Vorrichtung nach einem der Ansprüche 1 bis 5, dadurch **gekennzeichnet,** daß sie, ausgedrückt als Gew.-%, bezogen auf die gesamte Zusammensetzung:
    zwischen 10 und 60% Polymermatrix oder Harz
    zwischen 5 und 40% Weichmacher
    zwischen 3 und 80% Wirkstoff
    zwischen 5 und 80% Träger der bzw. des Wirkstoffe(s) umfaßt.

7.  Vorrichtung nach Anspruch 6, dadurch **gekennzeichnet,** daß sie zwischen 5 und 50% Träger des Wirkstoffs umfaßt.

8.  Vorrichtung nach einem der Ansprüche 1 bis 7, dadurch **gekennzeichnet,** daß sie weiterhin eine polymere Umhüllung, die gegenüber dem bzw. den Wirkstoff(en) dicht ist und teilweise die Oberfläche der Vorrichtung bedeckt, enthält.

9.  Vorrichtung nach Anspruch 8, dadurch **gekennzeichnet,** daß die Umhüllung ein Polymeres, ausgewählt aus der Gruppe, die Vinylpolymere, Polyethylene, Polypropylene, Polyacetate, Polyurethane und Vinylacetate umfaßt, ist.

10. Verfahren zur Herstellung einer Vorrichtung nach einem der Ansprüche 1 bis 9, **gekennzeichnet** durch die folgenden Stufen:
    (a) Herstellung eines Pulvers aus einer Polymermatrix oder einem Harz, worin ein Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;
    (b) Abkühlen des gemäß (a) erhaltenen Pulvers auf eine Temperatur unter 30°C;
    (c) Mischen von mindestens einem Träger für den Wirkstoff mit dem gemäß (b) erhaltenen Pulver in der Kälte, dann
    (d) Zugabe der bzw. des Wirkstoffe(s), auf eine Temperatur unter 30°C, und
    (e) geeignete Formgebung, auf eine Temperatur unter 30°C, nach irgendeinem geeigneten Verfahren.

11. Verfahren nach Anspruch 10, dadurch **gekennzeichnet,** daß die geeignete Temperatur zum Heißspritzen des Weichmachers in der Größenordnung von 70 bis 80°C liegt.

12. Oral verabreichbares Medikament, dadurch **gekennzeichnet,** daß es eine Vorrichtung nach einem der Ansprüche 1 bis 9 umfaßt.

13. Über Hautkontakt verabreichbares Medikament, dadurch **gekennzeichnet,** daß es eine Vorrichtung nach einem der Ansprüche 1 bis 9 umfaßt.

14. Antiparasitäres Halsband, dadurch **gekennzeichnet,** daß es eine Vorrichtung nach einem der Ansprüche 1 bis 9 umfaßt.

**Patentansprüche für folgende Vertragsstaaten : ES, GR**

1.  Vorrichtung zur progressiven und programmierten Freisetzung einer oder mehrerer Substanz(en) oder Wirkstoff(e), dadurch **gekennzeichnet,** daß sie erhalten werden kann durch:
    (a) Herstellung eines Pulvers aus einer Polymermatrix oder einem Harz, worin mindestens ein geeigneter Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;

(b) Abkühlen des gemäß (a) erhaltenen Pulvers auf eine Temperatur unter 30°C;

(c) Mischen von mindestens 5% mindestens eines Trägers für den Wirkstoff mit dem gemäß (b) erhaltenen Pulver in der Kälte, dann

(d) Zugabe, der bzw. des Wirkstoffe(s), auf eine Temperatur unter 30°C, und

(e) geeignete Formgebung, auf eine Temperatur unter 30°C, des gemäss (d) erhaltenen Pulvers auf jede geeignete Art, wobei die Vorrichtung den Wirkstoff gleichförmig und vollständig freisetzt.

2. Vorrichtung nach Anspruch 1, dadurch **gekennzeichnet,** daß der Träger für den Wirkstoff vorteilhafterweise aus der Gruppe mineralische Füllstoffe, wie Bariumsulfat, Calciumcarbonat, Zeolithe, Diatomeen, Kaolin, Talk, Kieselerde, hydratisiertes Calciumsilicat, Antimontrioxid, Titanoxid, kleine Glaskugeln, natürliche oder synthetische Textilfasern und Sägemehl, ausgewählt ist.

3. Vorrichtung nach Anspruch 1 oder 2, dadurch **gekennzeichnet,** daß der Weichmacher aus der Gruppe, die Ester, wie Phthalate, Adipate, Sebacate oder Phosphate, umfaßt, ausgewählt ist.

4. Vorrichtung nach einem der Ansprüche 1 bis 3, dadurch **gekennzeichnet,** daß sie weiterhin mindestens einen Hilfsstoff, ausgewählt aus der Gruppe Farbstoffe, Pigmente, Schmiermittel, Antioxidantien, Wärme- oder UV-Stabilisatoren, Treibmittel, Desodorantien, Parfums, sonstige Biozide, Anlockungsmittel, enthält.

5. Vorrichtung nach einem der Ansprüche 1 bis 4, dadurch **gekennzeichnet,** daß die Matrix , ausgehend von Polymeren oder von Copolymeren, ausgewählt aus der Gruppe Vinylpolymere, Polyethylene, Polypropylene, Polyacetate, Polyurethane und Vinylacetate, hergestellt ist.

6. Vorrichtung nach einem der Ansprüche 1 bis 5, dadurch **gekennzeichnet,** daß sie, ausgedrückt als Gew.-%, bezogen auf die gesamte Zusammensetzung:

zwischen 10 und 60% Polymermatrix oder Harz

zwischen 5 und 40% Weichmacher

zwischen 3 und 80% Wirkstoff

zwischen 5 und 80% Träger der bzw. des Wirkstoffe(s) umfaßt.

7. Vorrichtung nach Anspruch 6, dadurch **gekennzeichnet,** daß sie zwischen 5 und 50% Träger des Wirkstoffs umfaßt.

8. Vorrichtung nach einem der Ansprüche 1 bis 7, dadurch **gekennzeichnet,** daß sie weiterhin eine polymere Umhüllung, die gegenüber dem bzw. den Wirkstoff(en) dicht ist und teilweise die Oberfläche der Vorrichtung bedeckt, enthält.

9. Vorrichtung nach Anspruch 8, dadurch **gekennzeichnet,** daß die Umhüllung ein Polymeres, ausgewählt aus der Gruppe, die Vinylpolymere, Polyethylene, Polypropylene, Polyacetate, Polyurethane und Vinylacetate umfaßt, ist.

10. Verfahren zur Herstellung einer Vorrichtung nach einem der Ansprüche 1 bis 9, **gekennzeichnet** durch die folgenden Stufen:

(a) Herstellung eines Pulvers aus einer Polymermatrix oder einem Harz, worin ein Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;

(b) Abkühlen des gemäß (a) erhaltenen Pulvers auf eine Temperatur unter 30°C;

(c) Mischen von mindestens einem Träger für den Wirkstoff mit dem gemäß (b) erhaltenen Pulver in der Kälte, dann

(d) Zugabe der bzw. des Wirkstoffe(s), auf eine Temperatur unter 30°C, und

(e) geeignete Formgebung, auf eine Temperatur unter 30°C, nach irgendeinem geeigneten Verfahren.

11. Verfahren nach Anspruch 10, dadurch **gekennzeichnet,** daß die geeignete Temperatur zum Heißspritzen des Weichmachers in der Größenordnung von 70 bis 80°C liegt.

12. Verfahren zur Herstellung einer oral verabreichbares Medikament, dass es eine Vorrichtung nach einem der Ansprüche 1 bis 9 umfasst, dadurch gekennzeichnet dass die folgenden Stufen:

(a) Herstellung eines Pulvers aus einer Polymermatrix oder einem Harz, worin ein Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;

(b) Abkühlen des gemäß (a) erhaltenen Pulvers auf eine Temperatur unter 30°C;

(c) Mischen von mindestens einem Träger für den Wirkstoff mit dem gemäß (b) erhaltenen Pulver in der Kälte, dann

(d) Zugabe der bzw. des Wirkstoffe(s), auf eine Temperatur unter 30°C, und

(e) geeignete Formgebung, auf eine Temperatur unter 30°C, nach irgendeinem geeigneten Verfahren, enthält.

13. Verfahren zur Herstellung einer über Hautkontakt verabreichbares Medikament, dass es eine Vorrichtung nach einem der Ansprüche 1 bis 9 umfasst, dadurch gekennzeichnet dass die folgenden Stufen:

(a) Herstellung eines Pulvers aus einer Polymermatrix oder einem Harz, worin ein Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;

(b) Abkühlen des gemäß (a) erhaltenen Pulvers auf eine Temperatur unter 30°C;

(c) Mischen von mindestens einem Träger für den Wirkstoff mit dem gemäß (b) erhaltenen Pulver in der Kälte, dann

(d) Zugabe der bzw. des Wirkstoffe(s), auf eine Temperatur unter 30°C, und

(e) geeignete Formgebung, auf eine Temperatur unter 30°C, nach irgendeinem geeigneten Verfahren, enthält.

14. Verfahren zur Herstellung einer Antiparasitäres Halsband, dass es eine Vorrichtung nach einem der Ansprüche 1 bis 9 umfasst, dadurch gekennzeichnet dass die folgenden Stufen:

(a) Herstellung eines Pulvers aus einer Polymermatrix oder einem Harz, worin ein Weichmacher vollständig absorbiert vorliegt, durch Heißspritzen des Weichmachers, der zuvor auf der Matrix, die bei der Temperatur zur Sättigung des Harzes mit dem Weichmacher gehalten worden ist, erhitzt worden ist;

(b) Abkühlen des gemäß (a) erhaltenen Pulvers auf eine Temperatur unter 30°C;

(c) Mischen von mindestens einem Träger für den Wirkstoff mit dem gemäß (b) erhaltenen Pulver in der Kälte, dann

(d) Zugabe der bzw. des Wirkstoffe(s), auf eine Temperatur unter 30°C, und

(e) geeignete Formgebung, auf eine Temperatur unter 30°C, nach irgendeinem geeigneten Verfahren, enthält.

## Claims

**Claims for the following Contracting States : AT, BE, CH, DE, DK, FR, GB, IT, LI, LU, NL**

1. Device allowing the progressive and programmed release of one or more substances or active principles, characterised in that it may be obtained by

(a) preparation of a powder comprising a polymeric matrix or resin, in which at least one appropriate plasticiser is integrally absorbed, by hot spraying of the said plasticiser, which has been pre-heated, onto the said matrix kept at temperature, in order to saturate the said resin with plasticiser;

(b) cooling the powder obtained under (a) to a temperature below 30°C;

(c) cold mixing of at least 5% of at least one carrier for the active principle with the powder obtained under (b); then

(d) addition at a temperature below 30°C of the active principle or principles; and

(e) aprropriate shaping at a temperature below 30°C of the powder obtained under (d), by any suitable means, which device liberates the active principle in a uniform and complete manner.

2. Device according to Claim 1, characterised in that the support for the active principle is advantageously chosen from the group which comprises inorganic fillers, such as barium sulphate, calcium carbonate, zeolites, diatomaceous earths, kaolin, talc, silica, calcium silicate hydrate, antimony trioxide, titanium oxide, glass microspheres, natural or synthetic textile fibres and sawdust.

3. Device according to Claim 1 or Claim 2, characterised in that the plasticiser is chosen from the group which comprises esters such as phthalates, adipates, sebacates or phosphates.

4. Device according to any one of Claims 1 to 3, characterised in that it also comprises at least one adjuvant chosen from the group which comprises dyes, pigments, lubricants, antioxidants, heat or ultraviolet stabilisers, pore-forming agents, deodorants, perfumes, other biocides and attractants.

5. Device according to any one of Claims 1 to 4, characterized in that the matrix is produced from polymers or copolymers chosen from the group which comprises vinyl polymers, polyethylenes, polypropylenes, polyacetates, polyurethanes and vinyl acetates.

6. Device according to any one of Claims 1 to 5, characterised in that it comprises, expressed as percentage by weight of the total composition:
   - between 10 and 60% of polymeric matrix or resin
   - between 5 and 40% of plasticiser
   - between 3 and 80% of active principle
   - between 5 and 80% of carrier for the active principle or principles.

7. Device according to Claim 6, characterised in that it comprises between 5 and 50% of carrier for the active principle.

8. Device according to any one of claims 1 to 7, characterized in that it also comprises a polymer shell which is tight to the active principle or principles and partially covers the surface of the device.

9. Device according to Claim 8, characterised in that the shell is a polymer chosen from the group which comprises vinyl polymers, polyethylenes, polypropylenes, polyacetates, polyurethanes and vinyl acetates.

10. Process for the preparation of the device according to any one of Claims 1 to 9, characterised by the following steps:
   (a) preparation of a powder comprising the polymeric matrix or resin, in which the plasticiser is integrally absorbed, by hot spraying of the said plasticiser, which has been pre-heated, onto the said matrix kept at temperature, in order to saturate the said resin with plasticiser;
   (b) cooling the powder obtained under (a) to a temperature below 30°C;
   (c) cold mixing of at least one carrier for the active principle with the powder obtained under (b); then
   (d) addition at a temperature below 30°C of the active principle or principles; and
   (e) appropriate shaping, at a temperature below 30°C, by any any suitable means.

11. Process according to Claim 10, characterised in that the appropriate temperature for the hot spraying of the plasticiser is of the order of 70-80°C.

12. Medicament which can be administered per os, characterised in that it consists of a device according to any one of Claims 1 to 9.

13. Medicament which can be administered by cutaneous contact, characterised in that it consists of a device according to any one of Claims 1 to 9.

14. Anti-parasite collar, characterised in that it consists of a device according to any one of Claims 1 to 9.

**Claims for the following Contracting States : ES, GR**

1. Device allowing the progressive and programmed release of one or more substances or active principles, characterised in that it may be obtained by
   (a) preparation of a powder comprising a polymeric matrix or resin, in which at least one appropriate plasti-ciser is integrally absorbed, by hot spraying of the said plasticiser, which has been pre-heated, onto the said matrix kept at temperature, in order to saturate the said resin with plasticiser;
   (b) cooling the powder obtained under (a) to a temperature below 30°C;

EP 0 436 428 B1

(c) cold mixing of at least 5% of at least one carrier for the active principle with the powder obtained under (b); then
(d) addition at a temperature below 30°C of the active principle or principles; and
(e) appropriate shaping at a temperature below 30°C of the powder obtained under (d), by any suitable means, which device liberates the active principle in a uniform and complete manner.

2. Device according to Claim 1, characterised in that the support for the active principle is advantageously chosen from the group which comprises inorganic fillers, such as barium sulphate, calcium carbonate, zeolites, diatomaceous earths, kaolin, talc, silica, calcium silicate hydrate, antimony trioxide, titanium oxide, glass microspheres, natural or synthetic textile fibres and sawdust.

3. Device according to Claim 1 or Claim 2, characterised in that the plasticiser is chosen from the group which comprises esters such as phthalates, adipates, sebacates or phosphates.

4. Device according to any one of Claims 1 to 3, characterised in that it also comprises at least one adjuvant chosen from the group which comprises dyes, pigments, lubricants, antioxidants, heat or ultraviolet stabilisers, pore-forming agents, deodorants, perfumes, other biocides and attractants.

5. Device according to any one of Claims 1 to 4, characterized in that the matrix is produced from polymers or copolymers chosen from the group which comprises vinyl polymers, polyethylenes, polypropylenes, polyacetates, polyurethanes and vinyl acetates.

6. Device according to any one of Claims 1 to 5, characterised in that it comprises, expressed as percentage by weight of the total composition:
    - between 10 and 60% of polymeric matrix or resin
    - between 5 and 40% of plasticiser
    - between 3 and 80% of active principle
    - between 5 and 80% of carrier for the active principle or principles.

7. Device according to Claim 6, characterised in that it comprises between 5 and 50% of carrier for the active principle.

8. Device according to any one of claims 1 to 7, characterized in that it also comprises a polymer shell which is tight to the active principle or principles and partially covers the surface of the device.

9. Device according to Claim 8, characterised in that the shell is a polymer chosen from the group which comprises vinyl polymers, polyethylenes, polypropylenes, polyacetates, polyurethanes and vinyl acetates.

10. Process for the preparation of the device according to any one of Claims 1 to 9, characterised by the following steps:
    (a) preparation of a powder comprising the polymeric matrix or resin, in which the plasticiser is integrally absorbed, by hot spraying of the said plasticiser, which has been pre-heated, onto the said matrix kept at temperature, in order to saturate the said resin with plasticiser;
    (b) cooling the powder obtained under (a) to a temperature below 30°C;
    (c) cold mixing of at least one carrier for the active principle with the powder obtained under (b); then
    (d) addition at a temperature below 30°C of the active principle or principles; and
    (e) appropriate shaping, at a temperature below 30°C, by any any suitable means.

11. Process according to Claim 10, characterised in that the appropriate temperature for the hot spraying of the plasticiser is of the order of 70-80°C.

12. Process of preparation of a medicament which can be administered per os, constituted by a device according to any one of claims 1 to 9, characterized in that it comprises the following steps:
    (a) preparation of a powder comprising the polymeric matrix or resin, in which the plasticiser is integrally absorbed, by hot spraying of the said plasticiser, which has been pre-heated, onto the said matrix kept at temperature, in order to saturate the said resin with plasticiser;
    (b) cooling the powder obtained under (a) to a temperature below 30°C;
    (c) cold mixing of at least one carrier for the active principle with the powder obtained under (b); then

(d) addition at a temperature below 30°C of the active principle or principles; and

(e) appropriate shaping, at a temperature below 30°C, by any any suitable means.

13. Process of preparation of a medicanent which can be administered by cutaneous contact, constituted by a device according to any one of claims 1 to 9, characterized in that it comprises the following steps:

(a) preparation of a powder comprising the polymeric matrix or resin, in which the plasticiser is integrally absorbed, by hot spraying of the said plasticiser, which has been pre-heated, onto the said matrix kept at temperature, in order to saturate the said resin with plasticiser;

(b) cooling the powder obtained under (a) to a temperature below 30°C;

(c) cold mixing of at least one carrier for the active principle with the powder obtained under (b); then

(d) addition at a temperature below 30°C of the active principle or principles; and

(e) appropriate shaping, at a temperature below 30°C, by any any suitable means.

14. Process of preparation of an anti-parasite collar, constituted by a device according to any one of claims 1 to 9, characterized in that it comprises the following steps:

(a) preparation of a powder comprising the polymeric matrix or resin, in which the plasticiser is integrally absorbed, by hot spraying of the said plasticiser, which has been pre-heated, onto the said matrix kept at temperature, in order to saturate the said resin with plasticiser;

(b) cooling the powder obtained under (a) to a temperature below 30°C;

(c) cold mixing of at least one carrier for the active principle with the powder obtained under (b); then

(d) addition at a temperature below 30°C of the active principle or principles; and

(e) appropriate shaping, at a temperature below 30°C, by any any suitable means.

# FIG.1

(a)   (b)   (c)